## Europäisches Patentamt

## European Patent Office

## Office européen des brevets

(11) Veröffentlichungsnummer: **0 178 552**
A2

(12) # EUROPÄISCHE PATENTANMELDUNG

(21) Anmeldenummer: 85112560.9

(22) Anmeldetag: 04.10.85

(51) Int. Cl.⁴: **C 09 J 7/02**
B 05 D 5/04, C 09 D 3/727

(30) Priorität: 18.10.84 DE 3438129
22.02.85 DE 3506242

(43) Veröffentlichungstag der Anmeldung:
23.04.86 Patentblatt 86/17

(84) Benannte Vertragsstaaten:
AT BE CH DE FR GB IT LI NL SE

(71) Anmelder: Beiersdorf Aktiengesellschaft
Unnastrasse 48
D-2000 Hamburg 20(DE)

(72) Erfinder: Gafron, Gisbert
Fuchsversteck 19
D-2000 Hamburg 61(DE)

(54) Verfahren zur Herstellung von Selbstklebebändern.

(57) Verfahren zur Herstellung von mit üblichen Druckfarben bedruckbaren Selbstklebebändern, bei dem eine Trägerfolie aus einem Olefinpolymer oder -copolymer, insbesondere Polypropylen, aus Polyvinylchlorid oder einem Polyester, die – gegebenenfalls nach vorheriger Oberflächenbehandlung und/oder unter Verwendung zusätzlicher besonderer Grundier- oder Verankerungsaufstriche (Primer) – auf einer Seite mit einer Selbstklebeschicht und auf der Gegenseite mit einer klebstoffabweisenden Rückseitenbeschichtung versehen wird, dadurch gekennzeichnet, daß zur Erzielung der gewünschten Bedruckbarkeit bei gleichzeitig guter klebstoffabweisender Wirkung die Rückseite der Trägerfolie, vorzugsweise nach üblicher vorheriger Oberflächenbehandlung mittels elektrischer Ladungen (Corona-Behandlung), durch Flammvorbehandlung oder durch Behandlung mit chemischen Mitteln, mit einem dünnen Aufstrich der Lösung eines Lackes in einem flüchtigen organischen Lösungsmittel beschichtet und anschließend getrocknet wird, der aus einem Gemisch aus a) chlorierten Polyolefinen mit einem Chlorgehalt von 30 bis 45 % oder Polyvinylidenchlorid oder einem Vinylidenchlorid-Copolymerisat und b) einem Trennmittel besteht.

EP 0 178 552 A2

0178552

BEIERSDORF AKTIENGESELLSCHAFT
HAMBURG


Verfahren zur Herstellung von Selbstklebebändern


Die Erfindung bezieht sich auf schwer zu bedruckende
Klebebänder aus Olefinpolymeren oder -copolymeren und
Polyestern sowie auf solche aus Polyvinylchlorid, die
sowohl als Folien, Verbundfolien als auch in Form von
gewebekaschierten Trägern vorliegen können, wobei das
Folienmaterial mono- oder biaxial gereckt sein kann, und
hat ein Verfahren zur Herstellung von bedruckbaren Selbstklebebändern und nach diesem Verfahren erhältliche bedruckbare und bedruckte Selbstklebebänder zum Gegenstand.

Um eine ausreichende Verankerung und Haftung von
Farben, Grundierschichten, Trennlacken und dergleichen
Aufstriche auf derartigen Folien zu erhalten, ist es
üblich, die Oberfläche solcher Folien in bekannter Weise
mittels elektrischer Ladungen (Corona-Behandlung), durch
Flammbehandlung, durch Behandlung mit chemischen Mitteln
oder unter Anwendung weiterer geeigneter Methoden zu
aktivieren. Durch diese Vorbehandlungs-Methoden wird die
Folienoberfläche unter Erhöhung der Oberflächenspannung
soweit verändert, daß damit die physikalisch-chemischen
Bedingungen zur Aufnahme, Haftung und Fixierung von Druckfarben und Aufstrichen auf derartigen Folienoberflächen
geschaffen werden. Zur Herstellung von Selbstklebebändern
aus den genannten Trägermaterialien, werden letztere daher
häufig je nach Art und Eigenschaften der gewählten
Selbstklebemasse ein- oder beidseitig nach einer der
beschriebenen Methoden vorbehandelt und alsdann -
gegebenenfalls unter Verwendung zusätzlicher besonderer
Grundier- und Verankerungsschichten (Primer) - auf einer Seite mit der Selbstklebemasse beschichtet und auf der gegenüberliegenden klebstofffreien Seite bei Bedarf mit einer klebstoffabweisenden Beschichtung (Trennlack) versehen. Grundier- oder Verankerungsschichten bestehen üblicherweise aus einer Elastomeren - und/oder Kunststofflösung oder -dispersion und enthalten in vielen Fällen jeweils einen Bestandteil der beiden zu verbindenden Schichten.

Kunststoffabweisende Beschichtungen oder Trennlackierungen, die in Form von dünnen Aufstrichen auf die klebstofffreie Rückseite insbesondere von solchen Selbstklebebändern aufgetragen werden, die eine glatte Folie als Träger haben, haben die Aufgabe, nach dem Aufwickeln eines solchen Klebebandes zu einer Rolle den a) Übergang der Selbstklebeschicht von der Vorderseite des Trägers auf die klebstofffreie Rückseite zu verhindern (Umspulen) b) evtl. Spleißen gereckter PP-Folien zu verhindern und auch ein leichtes Abrollen des Klebebandes von der Rolle, beispielsweise in Abrollvorrichungen und -automaten, selbst dann zu ermöglichen, wenn das zu Rollen aufgewickelte Haftklebeband über längere Zeit unter ungünstigen Temperaturbedingungen gelagert wurde. Denn bekanntlich besitzt ein Rückseitenüberzug nur dann ausreichende trennende Eigenschaften gegenüber der Selbstklebeschicht, wenn er gegenüber dem Klebstoff eine geringere Haftung aufweist als an dem Träger selbst, an dem er so fest haften muß, daß im aufgerollten Zustand ein Übergang auf die Klebstoffschicht der nächsten Wicklung mit Sicherheit verhindert wird.

Wenn derartige Klebebänder nachträglich auf der Rückseite bedruckt werden sollen, verhindert normalerweise der Trennlack oder die klebstoffabweisende Beschichtung eine ausreichende Verankerung des Drucks oder der Farbe, so daß beim Abrollen eines bedruckten, zu einer Rolle aufgewikkelten Selbstklebebandes die Tendenz besteht, daß die Druckfarbe von der Klebstoffschicht mitgerissen wird und somit von der bedruckten Rückseite auf die Klebstoffschicht übergeht. Stellt schon die Auswahl eines zur Rückseitenbeschichtung von Selbstklebebändern auf Folienbasis geeigneten Trennlacks ein besonderes Problem dar, zumal die bekannten für diesen Zweck verwendbaren klebstoffabweisenden Beschichtungsmassen und Trennlacke in der Regel nicht universell verwendbar sind, sondern nur in Verbindung mit ganz bestimmten Trägermaterialien und Klebstoffzusammensetzungen verwendet werden können, so werden die Schwierigkeiten bei der Auswahl noch wesentlich größer, wenn solche Rückseitenüberzüge zusätzlich noch mit üblichen Druckfarben bedruckt werden sollen.

Das hierbei zu lösende Problem besteht darin, eine als Überzug für die Rückseite von Selbstklebebändern verwendbare Zusammensetzung aufzufinden und zu entwickeln, die beim Abrollen eines zu einer Rolle aufgewickelten Klebebandes nicht nur den Übergang des Klebstoffs von der nächstfolgenden Wicklung verhindert, sondern auch eine Übertragung von Druckfarben und Druckzeichen von der Rückseite des Trägers auf die Klebstoffschicht verhindert.

Es sind Rückseitenbeschichtungen bekannt, die eine gewisse beschränkte Trennwirkung gegenüber der Selbstklebemasse auf der Gegenseite des Folienträgers aufweisen und sich zusätzlich bedrucken lassen. Damit hergestellte Selbstklebebänder lassen sich ohne besondere Abdeckfolien oder Zwischenlagen zu einer Rolle aufwickeln, ohne daß beim Abrollen ein Übergang des Drucks von der Trägerrückseite auf die Klebstoffschicht erfolgt (CA-PS 772 120, DE-OS 2 018 929). Derartige Trennbeschichtungen (Trennschichten) sind jedoch in ihrer Anwendbarkeit auf ganz bestimmte Folien beschränkt, insbesondere auf solche aus Polyvinylchlorid, und erfordern zudem Klebstoffe, die nur eine geringe bis mäßige Klebkraft besitzen.

Werden solche Rückseitenbeschichtungen in Verbindung mit andersartigen Folienträgern und stärker klebenden Selbstklebemassen eingesetzt, so ist es unumgänglich, nach dem Bedrucken des Klebebandes und vor dem Aufwickeln zur Rolle, den Druck nach dem Trocknen mit einer zusätzlichen Trennlackbeschichtung zu versehen, die alsdann wiederum getrocknet werden muß. Es sind Maschinen und Vorrichtungen entwickelt worden, die im Verbund mit einer Druckmaschine auf der mit dem Trennlack versehenen Klebebandrückseite erst einen Primer, nach dem Trocknen die Druckfarbe und nach abermaligem Trocknen eine weitere Trennlackschicht auftragen.

Nur durch Überlacken bzw. Überdrucken der Druckfarbe nach dem Trocknen mit einem Trennlack - vorzugsweise in Form einer Lösung des Lackes in einem geeigneten flüchtigen organischen Lösungsmittel - kann in diesem Falle sichergestellt werden, daß die gewünschte niedrige Abrollkraft des zur Rolle aufgewickelten Selbstklebebandes erreicht wird und beim Abrollen kein Übergang von Teilen der Trennschicht oder der Druckfarbe auf die Klebstoffschicht erfolgt.

Gerade bei dünnen biaxial gereckten Polypropylenfolien, die recht elastisch sein können, oder stark längsgereckten PP-Folien die leicht spleißen, ist schon vor dem Bedrucken eine niedrige Abrollkraft nötig, um das Material verarbeiten zu können.

Aufgabe der vorstehenden Erfindung ist es, einen Trennlack für die Rückseitenbeschichtung von Selbstklebebändern zu entwickeln, der neben einer guten Haftfestigkeit auf der Trägerfolie sowohl gute hafthindernde Eigenschaften gegenüber Klebemassen unterschiedlicher Zusammensetzung als auch eine ausgezeichnete Aufnahmefähigkeit für übliche Druckfarben aufweist und die erwünschte niedrige Abrollkraft entweder durch Überlackierung mit einem Trennlack im gleichen Arbeitsgang oder durch Abmischen der Druckfarbe mit einem Trennmittel erreicht wird, ohne daß es einer zusätzlichen Anwendung einer besonderen Grundierschicht (Primer) bedarf.

Gegenstand der Erfindung ist somit ein Verfahren zur Herstellung von mit üblichen Druckfarben bedruckbaren Selbstklebebändern, bei dem eine Trägerfolie aus einem Olefinpolymer oder -copolymer, insbesondere Polypropylen, aus Polyvinylchlorid oder einem Polyester, die - gegebenenfalls nach vorheriger Oberflächenbehandlung und/oder Verwendung zusätzlicher besonderer Grundier- und Verankerungsaufstriche (Primer) - auf einer Seite mit einer Selbstklebeschicht und auf der Gegenseite mit einer klebstoffabweisenden Rückseitenbeschichtung versehen wird, das dadurch gekennzeichnet ist, daß zur Erzielung der gewünschten Bedruckbarkeit bei gleichzeitig guter klebstoffabweisender Wirkung die Rückseite der Trägerfolie, vorzugsweise nach üblicher vorheriger Oberflächenbehandlung mittels elektrischer Ladungen (Corona-Behandlung), durch Flammvorbehandlung oder durch Behandlung mit chemischen Mitteln, mit einem dünnen Aufstrich der Lösung eines Lackes in einem flüchtigen organischen Lösungsmittel beschichtet und anschließend getrocknet wird, der aus einem Gemisch aus a) chlorierten Polyolefinen mit einem Chlorgehalt von 30 bis 45 % oder Polyvinylidenchlorid oder einem Vinylidenchlorid-Copolymerisat und b) einem Trennmittel besteht.

Das erfindungsgemäße Verfahren hat gegenüber den bekannten Verfahren den Vorteil, daß - ohne zusätzliche Verankerungsvorstriche von Primer und Trennmittel, wobei Druckfarbe und Trennmittel getrennt, aber in einem Arbeitsgang oder als Gemisch aufgebracht werden können - ein sehr leicht abrollbares Klebeband hergestellt werden kann, das sich bezüglich der erzielbaren niedrigen Abrollkraftwerte nicht oder nur unwesentlich von denen des entsprechenden unbedruckten Klebebandes unterscheidet.

Um bedruckbare Trennlacke von derart leichter Abrollbarkeit (0,7 bis 0,9 N/cm bei einer Abrollgeschwindigkeit von 30 m/min und 1,0 bis 2,5 N/cm bei einer Abrollgeschwindigkeit von 0,3 m/min) und hoher Haftfestigkeit sowohl auf dem Substrat als auch gegenüber der Druckfarbe zu erreichen, sind Lack- und Farbgrundstoffe in ihren chemischen und physikalischen Eigenschaften so aufeinander abzustimmen, daß sie die gewünschten Wirkungen optimal erzielen.

Vorzugsweise soll das Trennmittel in den Lackzusammensetzungen gemäß der Erfindung aus einem Polyvinylcarbamat bestehen, insbesondere aus Polyvinylstearylcarbamat. Bei den als Trennmittel einsetzbaren Polyvinalcarbamaten, die zweckmäßig mindestens 14 Kohlenstoffatome bis etwa 30 Kohlenstoffatomen in der Alkylseitenkette enthalten, handelt es sich um bekannte Verbindungen, die durch Umsetzung von Polyvinylalkohol mit einem geeigneten langkettigen Isocyanat hergestellt werden (DE-PS 955 983). Daneben sind für den erfindungsgemäßen Zweck auch andere Verbindungen geeignet, die im Molekül einerseits einen oder mehrere langkettige Alkylreste mit 12 bis 20 Kohlenstoffatomen (insbesondere Stearyl- oder Stearylgruppen) und andererseits polare Gruppen enthalten, wie sie bereits zur Erzielung wasser- oder klebstoffabweisender Effekte bei unterschiedlichen technischen Produkten vorgeschlagen wurden.

Gemäß einer Ausführungsform der Erfindung besteht der Trennlack aus einem Gemisch aus a) 70 bis 95 Gew.-% chlorierten Polyolefinen (chlorierten Polyäthylen oder Polypropylen bzw. entsprechenden chlorierten Copolymeren) mit einem Chlorgehalt von 30 bis 45 % und b) 5 bis 30 Gew.-% eines Polyvinylcarbamats. Vorzugsweise enthält er neben 75 bis 85 Gew.-% an chlorierten Polyolefinen 15 bis 25 Gew.-% des Polyvinylcarbamats, insbesondere etwa 20 Gew.-%.

Gemäß einer weiteren Ausführungsform besteht der im erfindungsgemäßen Verfahren eingesetzte Trennlack aus einem Gemisch aus a) 30 bis 80 Gew.-% Polyvinylidenchlorid oder eines Vinyliden-Copolymerisats und b) 20 bis 70 Gew.-% eines Polyvinylcarbamats, vorzugsweise aus 35 bis 45 Gew.-% Polyvinylidenchlorid oder eines Vinylidenchlorid-Copolymerisats und entsprechend 55 bis 65 Gew.-% Polyvinylcarbamat, insbesondere etwa 60 Gew.-%.

Als Vinylidenchlorid-Copolymere sind hierfür solche geeignet, die durch Copolymerisation von Vinylidenchlorid mit bis zu 30 Gew.-% eines oder mehrerer äthylenisch ungesättigter Monomeren, wie insbesondere Acrylnitril und/oder Vinylchlorid, hergestellt werden, insbesondere Copolymerisate von 70 bis 95 Gew.-% Vinylidenchlorid mit 5 bis 30 Gew.-% Acrlynitril und/oder Vinylchlorid.

Im Falle, daß in den vorstehend aufgeführten Trennlacken anstelle von Polyvinylcarbamat ein anderes der genannten Trennmittel eingesetzt werden soll, muß das Gewichtsverhältnis der beiden Lack-Komponenten entsprechend variiert werden, was vom Fachmann aufgrund seiner Sachkenntnis durch einfaches Ausprobieren ohne Schwierigkeiten bewerkstelligt werden kann.

Zweckmäßigerweise werden die Trennlacke in Form einer Lösung des gewählten Lackes in einem flüchtigen organischen Lösungsmittel oder Lösungsmittelgemisch in einer solchen Menge auf die vorzugsweise vorbehandelte rückseitige Oberfläche der Trägerfolie aufgetragen, daß nach dem Trocknen in einer üblichen Trockenvorrichtung eine Auftragsmenge von 0,3 bis 2,0 g/m$^2$, bevorzugt von 0,5 bis 1,0 g/m$^2$, erhalten wird. Geeignete Lösungsmittel sind Trichloräthan, niedere Alkohole, Ketone, wie Aceton, Methyläthylketon (Butanon) und Cyclohexanon, sowie aromatische Kohlenwasserstoffe, wie Toluol oder deren Gemische. Vorzugsweise werden Lösungsmittelsysteme benutzt, die zu homogenen Polymerengemischen führen.

Als Druckfarben auf Lösungsmittelbasis, deren spezielle Zusammensetzung vom Druckverfahren, vom Druckgrund und von den Echtheitseigenschaften abhängt und die neben Farbstoffen, Bindemittel, wie Polyvinylacetat, chlorierten Polyolefinen, Nitrozellulose, Verdickungsmittel, Trockenstoffe und gegebenenfalls Füllstoffe enthalten, können die üblichen Druckfarben-Zusammensetzungen verwendet werden. Besonders bevorzugt sind Druckfarben auf Polyvinylacetatbasis, wie sie für PVC-Klebebänder verwendet werden. Diese verankern erfindungsgemäß besonders gut, wobei man verschiedenartige Träger (PP, PVC, Polyester) bei gleicher Ausrüstung mit derselben Druckfarbe bedrucken kann, zu Produkten, die leicht abrollbar sind und bei Vorteilen in der Lagerhaltung.

Gemäß einer bevorzugten Ausführungsart des erfindungsgemäßen Verfahrens kann der Druckfarbe ebenfalls ein Trennmittel, insbesondere ein Polyvinylcarbamat, vorzugsweise in einer Menge bis zu 30 Gew.-% zugesetzt werden, wobei zweckmäßig das gleiche oder ein chemisch ähnliches Trennmittel gewählt wird wie bei dem zur Erzielung der Bedruckbarkeit der Folienoberfläche verwendeten Lack. Bei Durchführung dieser Maßnahme ist die Affinität gegenüber der Druckfarbe doppelt vorhanden, und zwar einmal zwischen den beispielsweise chlorierten Polyolefinen des Lackes und dem Bindemittel (Polyvinylacetat) der Farbe und zum anderen durch die Verschmelzung des sowohl im Lack als auch in der Druckfarbe enthaltenen Trennmittels mittels der durch die Trocknung (z.B. IR-Trocknung) eingebrachten Wärme.

Es sind aber auch erfindungsgemäß UV-Druckfarben einsetzbar, wobei diese je nach Konsistenz im Buch- oder im Flexodruck verarbeitet werden können. Voraussetzung ist nur die entsprechende UV-Ausrüstung der Druckmaschinen.

Als Selbstklebemassen können im Rahmen des erfindungsgemäßen Verfahrens die üblichen Selbstklebemassen vom Kautschuk-/Harz-Typ eingesetzt werden, wobei als Kautschuk-Komponente Naturkautschuk, Synthesekautschuk, kautschukartige Block-Copolymere als auch Polyisobutylen und als Harzkomponente die üblichen Klebharze verwendet werden können. Daneben können als Selbstklebemasse auch stark klebende Massen auf Basis von Acrylsäureester-Polymerisaten und -copolymerisaten eingesetzt werden. Im letzteren Falle - wie auch in Spezialfällen in Abhängigkeit vom gewählten Trägermaterial - hat es sich als zweckmäßig erwiesen, auf die bedruckte Trennschicht einen zusätzlichen dünnen Aufstrich des Trennlackes aufzubringen, um auch in diesen Sonderfällen die erwünschte leichte Abrollbarkeit des zu einer Rolle aufgewickelten Klebebandes zu erzielen, und die hohe Affinität zwischen Acrylat-Selbstklebemassen und Polyvinylacetat der Druckfarbe zu blokkieren.

Die Erfindung betrifft auch nach dem Verfahren hergestellte, mit üblichen Druckverfahren bedruckbare Selbstklebebänder mit einer Trägerfolie aus einem Olefinpolymer oder -copolymer, insbesondere Polypropylen, aus Polyvinylchlorid, oder einem Polyester, die nach dem Schneiden des zu Rollen aufgewickelten Klebebandes in gewünschte Breiten zunächst gelagert und zu einem späteren Zeitpunkt bedruckt werden können, sowie die so bedruckten Selbstklebebänder.

Die Erfindung wird anhand der folgenden Beispiele näher erläutert:

Beispiel 1

Eine biaxial gereckte Polypropylenfolie einer Dicke von 30 µ, die zuvor durch Corona- oder Flammvorbehandlung beidseitig vorbehandelt worden war, wurde auf einer Seite mittels einer üblichen Auftragsvorrichtung mit einer Trennlack-Lösung der folgenden Zusammensetzung:

|  | Gew.-Teile: |
|---|---|
| Chlorierte Polyolefine/Copolymere mit einem Chlorgehalt von 30 - 45 % ("Trapilen 814 H", 60%ig, Tramaco) | 4,80 |
| Polyvinylstearylcarbamat | 0,72 |
| Toluol | 75,58 |
| Äthanol | 18,90 |
|  | 100,-- |

(Feststoffgehalt: 3,6 %)

in einer solchen Menge beschichtet, daß nach dem Trocknen eine Auftragsmenge von 0,8 g/m$^2$ erhalten wurde. Anschließend wurde im gleichen Arbeitsgang auf der unbeschichteten Gegenseite der Trägerfolie unter Zwischenschaltung einer dünnen Grundier- oder Verankerungsschicht aus einer Elastomer/Kunststoffdispersion eine übliche Selbstklebeschicht aufgetragen, die aus einem Gemisch aus Naturkautschuk und Polyisobutylen und Polyterpenharz bestand. Das so hergestellte Material ist leicht abrollbar. Es wurde zu Einzelrollen geschnitten. Diese Rollen wurden dann nach Bedarf mit einer Druckfarbe der folgenden Zusammensetzung bedruckt und getrocknet:

|  | Gew.-Teile: |
|---|---|
| Farbpigmente + Bindemittel (Polyvinylacetat) | 170 |
| Polyvinylstearylcarbamat | 73 |

| Cyclohexanon-Butanon | 330 |
| Toluol | 292 |
| | 865 |

Ein so hergestelltes Selbstklebeband konnte nach dem Aufwickeln zu einer Rolle ebenfalls mit geringer Abrollkraft leicht von der Rolle abgezogen werden, ohne daß Teile des Trennlackes oder des Druckes auf die Klebstoffschicht übergingen.

## Beispiel 2

Eine monoaxial gereckte Polypropylenfolie einer Dicke von 90 μ, die zuvor durch Corona-Behandlung einseitig vorbehandelt worden war, wurde auf der vorbehandelten Seite mittels einer üblichen Auftragsvorrichtung mit einer Trennlack-Lösung der folgenden Zusammensetzung:

| | Gew.-Teile |
| Vinylidenchlorid/Acrylnitril-Copolymer ("Saran F 310", Dow Chemical Comp.) | 1,6 |
| Polyvinylstearylcarbamat | 2,4 |
| Butanon | 48,0 |
| Toluol | 48,0 |
| | 100,0 |

(Feststoffgehalt: 4,0 %)
in einer solchen Menge beschichtet, daß nach dem Trocknen eine Auftragsmenge von 0,7 $g/m^2$ erhalten wurde. Anschließend wurde wie im Beispiel 1 angegeben verfahren.

Es wurde ein Selbstklebeband mit den im Beispiel 1 geschilderten vorteilhaften Eigenschaften erhalten.

## Beispiel 3

Ausrüstung der Trägerfolie analog Beispiel 1 oder 2.

Die so gefertigten Klebebandrollen wurden dann mit handelsüblichen Druckfarben, z.B. auf Polyvinylacetatbasis, bedruckt und im gleichen Arbeitsgang überlackiert.

Beispiel 4

Ausrüstung der Trägerfolie wiederum analog Beispiel 1 oder 2.

Diese Klebebänder werden mit UV-Druckfarben bedruckt und nach der UV-Behandlung im gleichen Arbeitsgang überlackiert.

Da bei diesem Verfahren an den Druckmaschinen keine Farblösemittel, wie Ketone, Ester, Toluol etc., anfallen und beim Überlackieren lediglich Aethylalkohol und leichtsiedende Paraffine, ist diese Fertigung ohne besondere Vorkehrungen sehr umweltfreundlich.

0178552

Patentansprüche

1. Verfahren zur Herstellung von mit üblichen Druckfarben bedruckbaren Selbstklebebändern, bei dem eine Trägerfolie aus einem Olefinpolymer oder -copolymer, insbesondere Polypropylen, aus Polyvinylchlorid oder einem Polyester, die - gegebenenfalls nach vorheriger Oberflächenbehandlung und/oder unter Verwendung zusätzlicher besonderer Grundier- oder Verankerungsaufstriche (Primer) - auf einer Seite mit einer Selbstklebeschicht und auf der Gegenseite mit einer klebstoffabweisenden Rückseitenbeschichtung versehen wird, dadurch gekennzeichnet, daß zur Erzielung der gewünschten Bedruckbarkeit bei gleichzeitig guter klebstoffabweisender Wirkung die Rückseite der Trägerfolie, vorzugsweise nach üblicher vorheriger Oberflächenbehandlung mittels elektrischer Ladungen (corona-Behandlung), durch Flammvorbehandlung oder durch Behandlung mit chemischen Mitteln, mit einem dünnen Aufstrich der Lösung eines Lackes in einem flüchtigen organischen Lösungsmittel beschichtet und anschließend getrocknet wird, der aus einem Gemisch aus a) chlorierten Polyolefinen mit einem Chlorgehalt von 30 bis 45 % oder Polyvinylidenchlorid oder einem Vinylidenchlorid-Copolymerisat und b) einem Trennmittel besteht.

2. Verfahren nach Anspruch 1, dadurch gekennzeichnet, daß als Trennmittel ein Polyvinylcarbamat, insbesondere Polyvinylstearylcarbamat, verwendet wird.

3. Verfahren nach den Ansprüchen 1 oder 2, dadurch gekennzeichnet, daß die Lacklösung in einer solchen Menge auf die vorzugsweise vorbehandelte rückseitige Oberfläche der Trägerfolie aufgetragen wird, daß nach dem Trocknen eine Auftragsmenge von 0,3 bis 2,0 $g/m^2$ erhalten wird.

4. Verfahren nach den Ansprüchen 1 bis 3, dadurch gekennzeichnet, daß der Lack aus einem Gemisch aus a) 70 bis 95 Gew.-% chlorierten Polyolefinen mit einem Chlor--halt von 30 bis 45 % und b) 5 bis 30 Gew.-% eines Polyvinylcarbamats besteht, vorzugsweise neben 75 bis 85 Gew.-% an chlorierten Polyolefinen 15 bis 25 Gew.-% des Polyvinylcarbamats enthält.

5. Verfahren nach den Ansprüchen 1 bis 3, dadurch gekennzeichnet, daß der Lack aus einem Gemisch aus a) 30 bis 80 Gew.-% Polyvinylidenchlorid oder eines Vinylidenchlorid-Copolymerisats und b) 20 bis 70 Gew.-% eines Polyvinylcarbamats besteht, vorzugsweise aus 35 bis 45 Gew.-% Polyvinylidenchlorid oder eines Vinylidenchlorid- Copolymerisats und entsprechend 55 bis 65 Gew.-% eines Polyvinylcarbamat.

6. Verfahren nach Anspruch 5, dadurch gekennzeichnet, daß als Vinylidenchlorid-Copolymerisat ein Copolymerisat verwendet wird, das durch Copolymerisation von 70 bis 95 Gew.-% Vinylidenchlorid mit 5 bis 30 Gew.-% Acrylnitril und/oder Vinylchlorid erhalten wurde.

7. Verfahren nach einem der Ansprüche 1 - 6, dadurch gekennzeichnet, daß die Trägerfolie des Selbstklebebandes aus Polypropylen oder seinen Copolymeren besteht.

8. Verfahren nach einem der Ansprüche 1 - 7, dadurch gekennzeichnet, daß die lackierte Trägerrückseite mit Druckfarben auf Basis von Polyvinylacetat, Nitrozellulose, Polyamid oder mit UV-Druckfarben bedruckt wird, worauf ggf. nach dem Bedrucken im gleichen Arbeitsgang ein Trennlack aufgetragen wird.

9. Mit üblichen Druckfarben auf Polyvinylacetatbasis bedruckbares Selbstklebeband mit einer Trägerfolie aus einem Olefinpolymer oder -copolymer, insbesondere Polypropylen, aus Polyvinylchlorid oder einem Polyester nach den Ansprüchen 1 bis 7, dadurch gekennzeichnet, daß die bedruckbare Rückseitenbeschichtung der Trägerfolie aus einem Gemisch aus a) chlorierten Polyolefinen mit einem Chlorgehalt von 30 bis 45 Gew.-% oder Polyvinylidenchlorid oder einem Vinylidenchlorid-Copolymerisat und b) einem Trennmittel besteht.

10. Bedrucktes Selbstklebeband nach Anspruch 8, dadurch gekennzeichnet, daß zum Bedrucken der Bandrückseite eine übliche Druckfarbe, insbesondere auf Polyvinylacetatbasis verwendet wurde, ein Trennmittel, insbesondere ein Polyvinylcarbamat, vorzugsweise in einer Menge bis zu 30 Gew.-%, zugesetzt wurde, wobei ggf. zum Bedrucken der Bandrückseite eine Druckfarbe verwendet wurde, die das gleiche oder ein chemisch ähnliches Trennmittel enthält wie der zur Erzielung der Bedruckbarkeit der Folienoberfläche verwendete Lack.